# EUROPÄISCHE PATENTSCHRIFT

(11) **EP 0 304 002 B1**
(45) Veröffentlichungstag und Bekanntmachung des Hinweises auf die Patenterteilung: **29.12.1993**
(21) Anmeldenummer: 88113219.5
(22) Anmeldetag: 16.08.1988
(51) Int. Cl.: B23B 51/00, B23B 51/08, B25F 3/00, B25B 21/00, B21D 41/00

(54) **Bohrer für Handbohrmaschinen, Schraubbithalter und Verfahren zum Herstellen dieser Werkzeuge**
Drill for portable drilling machine, screw holding bit and method for manufacturing these tools
Foret pour perceuse portative, adaptateur porte-visse et procédé pour leur fabrication

(30) Priorität: 20.08.1987 DE 3727799
(43) Veröffentlichungstag der Anmeldung: 22.02.1989
(73) Patentinhaber: HILTI Aktiengesellschaft, 9494 Schaan (LI)
(72) Erfinder: Kleine, Werner, Dipl.-Ing. Dipl.-Wirtsch.-Ing., D-2807 Achim-Uesen (DE)
(74) Vertreter: Wildi, Roland

(56) Entgegenhaltungen:
- DE-A- 2 822 372
- DE-A- 3 008 394
- FR-A- 1 581 657
- US-A- 4 088 001

## Beschreibung

Die Erfindung betrifft einen Bohrer für Handbohrmaschinen, bestehend aus einem maschinenseitigen Einspannschaft, einem Bohrerschaft mit mindestens einer Bohrkleinabführnut und mindestens einer Schneide, vorzugsweise aus hartem Schneidstoff, sowie zwischen Einspannschaft und Bohrerschaft konzentrisch zur Bohrerlängsachse liegenden Mitnahmeflächen, deren kleinster, diese Mitnahmeflächen umschreibender Hüllkreis grösser ist als der kleinste, die Bohrerschneiden umschreibende Hüllkreis und einen grösseren Durchmesser hat als ein kleinster, den maschinenseitigen Einspannschaft umschreibender Hüllkreis.

Bohrer dieser Art sind aus DE-A-28 22 372 bekannt und werden häufig für das Erzeugen von Bohrungen verwendet, in die nach dem Bohren Schrauben direkt oder nach dem Einsetzen von Dübeln in diese eingeschraubt werden. Da die modernen Handbohrmaschinen meist eine stufenlöse Drehzahlregelung haben, kann das Einschrauben durch ein von der Bohrmaschine angetriebenes Schraubbit erfolgen. Hierzu muss üblicherweise der Bohrer aus der Werkzeugaufnahme der Maschine genommen werden und dann erst das Schraubwerkzeug in die Werkzeugaufnahme eingespannt werden. Nach dem Einschrauben der Schraube muss sodann für die nächste Bohrung erst wieder das Schraubwerkzeug ausgespannt und anschliessend der Bohrer wieder eingespannt werden. Dieses Verfahren ist umständlich und zeitraubend. Eine deutliche Verbesserung bringt der eingangs beschriebene Bohrer, da nach dem Bohren der Bohrer in der Werkzeugaufnahme der Maschine verbleibt und ein rohrförmiger Schraubbithalter über den Bohrerschaft auf die vor der Werkzeugaufnahme liegenden Mitnahmeflächen des Bohrers geschoben wird. Mit dem an der Spitze des Schraubbithalters befestigten Schraubbit kann die Schraube eingeschraubt werden und anschließend muß für die nächste Bohrung lediglich der Schraubbithalter wieder von den Mitnahmeflächen des Bohrers abgenommen werden. Das heißt, die Zahl der Arbeitsgänge ist auf die Hälfte reduziert worden, wobei der Zeitgewinn noch größer ist, da das Aufschieben und Entfernen des Schraubbithalters nur wenige Sekunden dauert.

Die eingangs beschriebenen Bohrer weisen als Mitnahmeflächen einen Sechskant auf, dessen Schlüsselweite erheblich größer ist als der Durchmesser des Einspannschaftes. Dadurch wird die Fertigung dieser Bohrer erheblich verteuert, da das Ausgangsmaterial zur Fertigung des Bohrers einen Durchmesser haben muß, der gleich dem Durchmesser des kleinsten um den Sechskant gelegten Hüllkreises sein muß. Die hohen Herstellkosten standen der Verbreitung derartiger Bohrer bisher im Wege.

Die Sechskantfläche der bekannten Bohrer ist üblicherweise durch eine zur Bohrerlängsachse konzentrisch angeordnete umlaufende Nut unterbrochen, in die eine Kugel des Schraubadapters einrastet, um zu verhindern, daß z. B. beim Arbeiten auf einem Gerüst der Schraubadapter sich vom Bohrer löst und beim Herunterfallen jemanden verletzt.

Hierdurch werden die bekannten Bohrer weiter verteuert, da mehrere zusätzliche Arbeitsgänge notwendig sind, um Mitnahmeflächen sowie Rückhaltenut zu fertigen.

Der Erfindung liegt die Aufgabe zugrunde, einen Bohrertyp der eingangs geschilderten Art zu schaffen, der dank seiner Abmessungen kostengünstig herstellbar ist und wobei zugleich ein Verfahren zur rationellen Fertigung eines solchen Bohrertyps angegeben wird.

Erfindungsgemäss wird die Aufgabe dadurch gelöst, dass die Schlüsselweite der Mitnahmeflächen gleich bis das 1,2-fache des Durchmessers des Einspannschaftes ist und in dem vor dem Einspannschaft liegenden Abschnitt Vertiefungen spanlos eingeformt worden sind, wobei der hierbei verdrängte Werkstoff die Mitnahmeflächen bildet.

Durch die erfindungsgemässe Ausgestaltung ergeben sich für die Fertigung des Bohrers Vorteile. Zudem können der Aussendurchmesser sowie das Gewicht des Schraubadapters gering gehalten werden.

Durch die Erfindung werden Bohrer möglich, deren Bohrdurchmesserbereich so weit nach oben erweitert ist, daß er gleich dem Durchmesser des Einspannschaftes ist.

Da bei Bohrern für Gestein diese zwei Hartmetallschneidkanten haben, welche über den Bohrschaft herausragen und somit einen größeren Durchmesser haben als dieser Schaft, entspricht die Zahl der Mitnahmeflächen vorzugsweise einer geraden Zahl und die Mitnahmeflächen sind vorteilhaft als zur Bohrerlängsachse konzentrische Sechskantflächen ausgebildet. Hierdurch ist es möglich, daß der gleichfalls mit einem entsprechenden Innensechskant versehene rohrförmige Schraubadapter so über den Bohrer geschoben wird, daß unter Ausnutzung des Eckmaßes des Sechskantes auch Bohrer mit Bohrschneiden eines größeren Durchmessers als der Schlüsselweite des Sechskantes entspricht, verwendet werden können.

Bei einem Hammerbohrer mit dem Standardeinspannschaft von 10 mm Durchmesser wären erfindungsgemäß die Mitnahmeflächen somit vorteilhaft als Sechskant der Schlüsselweite 10 mm ausgebildet. Das Eckmaß des Sechskantes liegt in diesem Fall bei ca. 11,5 cm, so daß auch Gesteinsbohrer - die ja über den Bohrerschaft herausragende Schneiden haben - bis 11 mm Bohrerdurchmesser eingesetzt werden können. Hiermit sind über 90 % der in der Schraubbefestigung anfallenden Bohrungen abzudecken, wobei hinzukommt, daß das Drehmoment der Handbohrmaschinen für größere Schrauben, als die in diese Löcher passenden, nicht ausreicht. Insofern wird mit dem erfindungsgemäßen Bohrer der gesamte wünschenswerte Durchmesserbereich abgedeckt.

Bei einer vorteilhaften Ausbildung der Erfindung sind in den Mitnahmeflächen Vertiefungen, vorzugsweise als Rillen parallel zur Bohrerlängsachse ausgebildet. In diese Rillen greifen geeignete Verriegelungselemente des Schraubadapters, z. B. Walzen oder Kugeln, ein. Dadurch kann die axiale Anpreßkraft von der Handbohrmaschine über den Bohrer auf den Schraubadapter und die Schraube übertragen werden. Zugleich sichern diese in die Rillen eingreifenden Verriegelungselemente den Schraubadapter vor dem unbeabsichtigten Lösen vom Bohrer.

Sind die Rillen in den Mitnahmeflächen des Bohrers an der der Schneide abgewandten Seite tiefer ausgebildet, ergeben sich für die übertragung der axialen Kraft von Bohrer über das Verriegelungselement auf den Schraubadapter besonders günstige Kräfteverhältnisse. Außerdem wird die wegen der Führungsgenauigkeit unerwünschte axiale Beweglichkeit zwischen Bohrer und Schraubadapter minimiert.

Zur Verbesserung des Bedienungskomforts beim Aufschieben oder Abnehmen des Schraubadapters hat der Bohrer in einer weiteren vorteilhaften Ausbildung in jenen Fällen, in denen der Einspannschaft einen größeren Durchmesser hat als der Bohrerschaft, Einführnuten, die die Rillen in den Mitnahmeflächen mit dem Bohrerschaft verbinden, wobei die Einführnuten eine geringere Tiefe als die Rillen haben. Hierdurch werden kleinere Bewegungen beim Ver- und Entriegeln des Schraubadapters notwendig.

Besonders günstige Verhältnisse für die wirtschaftliche Fertigung liegen dann vor, wenn eine Querschnittsfläche rechtwinklig zur Bohrerlängsachse innerhalb der axialen Erstreckung der Mitnahmeflächen des Bohrers in Bezug auf die Querschnittsfläche des kreisrunden Einspannschaftes geringfügig kleiner bis annähernd gleich groß ist. Dies ist vorteilhaft für die Übertragung der Schlagenergie beim Hammerbohren, da jede stärkere Querschnittsreduktion zu einer Verringerung der an der Schneide verfügbaren Schlagenergie führt, was zu einer schlechteren Bohrleistung führt. Außerdem kann der Rohlingsdurchmesser, aus dem der Bohrer gefertigt wird, in diesem Fall kleinstmöglich gehalten werden.

Die Erfindung betrifft auch ein Verfahren zum wirtschaftlichen Herstellen von zwischen Einspannschaft und Bohrerschaft liegenden Mitnahmeflächen deren kleinster Hüllkreis größer ist als der kleinste Hüllkreis des Einspannschaftes eines Bohrers. Diese Aufgabe ist gemäß der Erfindung dadurch gelöst, daß in dem zylindrischen vor dem Einspannschaft gleichen Durchmessers liegenden Abschnitt Vertiefungen spanlos eingeformt werden und der hierbei verdrängte Werkstoff die Mitnahmeflächen bildet, wobei das Umformen durch mehrere radial auf den zylindrischen Teil einwirkende Umformwerkzeuge erfolgt. Die Zahl der Umformwerkzeuge ist hierbei vorteilhaft gleich der Zahl der Mitnahmeflächen. Dadurch ist es möglich, die Mitnahmeflächen einschließlich der Rückhaltesicherung und der Anlageflächen für die Übertragung der Axialkraft auf den Schraubadapter in kürzester Zeit in nur einen Arbeitsgang und an einem Bohrerrohling mit einen Durchmesser durchzuführen, der nicht größer ist als bei einem Bohrer ohne Mitnahmeflächen.

Die Erfindung betrifft auch einen rohrförmigen Schraubbithalter, wie er in Verbindung mit den eingangs geschilderten Bohrern notwendig ist. An seinem vorderen Ende weist er eine innere Mitnahme zur Aufnahme von Schraubbits auf, an seinem hinteren Ende eine innere Mitnahme zur Übertragung der Drehbewegung von einer Maschine oder einem Bohrer, und seine vordere wie hintere innere Mitnahme sind durch eine Längsöffnung miteinander verbunden.

Für Hammerbohrer mit einem Einsteckschaft von 10 mm Durchmesser und einem Sechskant als Mitnahme mit der Schlüsselweite 8 mm sieht ein solcher Schraubbitadapter wie nachstehend beschrieben aus: Die hintere Mitnahme des Schraubadapters ist als Innensechskant der Schlüsselweite 8 mm ausgebildet. Die anschließende Längsbohrung des Schraubadapters ist daher maximal 8 mm im Durchmesser, da in eine grössere Bohrung der Sechskant mit der Schlüsselweite 8 mm durch Stoßen nicht einzubringen wäre. Da aber zusätzlich die vordere Mitnahme einen Innensechskant mit 6,5 mm Schlüsselweite aufweist, in den Standardschraubbits mit einsprechendem Außensechskant eingesteckt werden, die Schraubbits aber eine zur Übertragung der Axialkraft hintere Anlagefläche im Innensechskant der Mitnahme benötigen, muß die an den vorderen Innensechskant anschließende Längsbohrung kleiner als 6,5 mm Durchmesser sein. Derartige Schraubadapter können daher auch nur mit Bohrern des größten Durchmessers 6,5 mm verwendet werden.

Aufgabe der Erfindung ist es daher einen Schraubadapter zu schaffen, der zum Aufstecken auch auf Bohrer größeren Durchmessers geeignet ist.

Gemäß der Erfindung ist vorgesehen, daß der Durchmesser der zwischen vorderer und hinterer Mitnahme liegenden Längsöffnung gleich groß, bzw. größer als das größte Eckmaß der Querschnittsfläche der hinteren inneren Mitnahme ist. Hierdurch wird in überraschender Weise erreicht, daß nicht mehr der Querschnitt der Längsöffnung den Bohrerdurchmesser begrenzt, sondern die Schlüsselweite der hinteren inneren Mitnahme des Schraubbitadapters. In Fällen, in denen Gesteinsbohrer mit überstehenden Schneiden verwendet werden, wird jetzt der Bohrerdurchmesser sogar erst durch das Eckmaß der hinteren Mitnahme begrenzt.

Vorzugsweise ist die Längsöffnung im Bereich hinter der vorderen inneren Mitnahme kleiner als deren Querschnitt, so daß zum einen die Schraubbits eine axiale Begrenzung erhalten und zum anderen in diesem Bereich der Längsöffnung ein Stabmagnet eingeklebt werden kann, mit dessen Hilfe Schrauben am Herabfallen gehindert werden.

Durch die erfindungsgemäße Ausbildung sowohl der Bohrer als auch der Schraubbithalter und die aufgezeigten Verfahren ist jetzt ein wirtschaftliches System aus Bohrer und Schraubhalter entstanden, daß die eingangs geschilderten Nachteile in vollständiger Weise beseitigt.

Die Erfindung ist in der folgenden Beschreibung von in den Zeichnungen dargestellten Ausführungsbeispielen im einzelnen erläutert.

Es zeigen:
- Fig. 1: eine Seitenansicht eines erfindungsgemäßen Hammerbohrers;
- Fig. 2: einen Schnitt nach der Linie II - II in Fig. 1 in vergrößerter Darstellung;
- Fig. 3: einen Schnitt nach der Linie III - III in Fig. 2;
- Fig. 4: einen Längsschnitt durch einen erfindungsgemäßen Schraubbithalter;
- Fig. 5: einen schnitt nach der Linie V - V in Fig. 4 in vergrößerter Darstellung;
- Fig. 6: einen Schnitt nach der Linie VI - VI in Fig. 4 in vergrößerter Darstellung
- Fig. 7: eine gemeinsame Seitenansicht der in Fig. 1 und Fig. 4 gezeigten Ausführungsbeispiele.

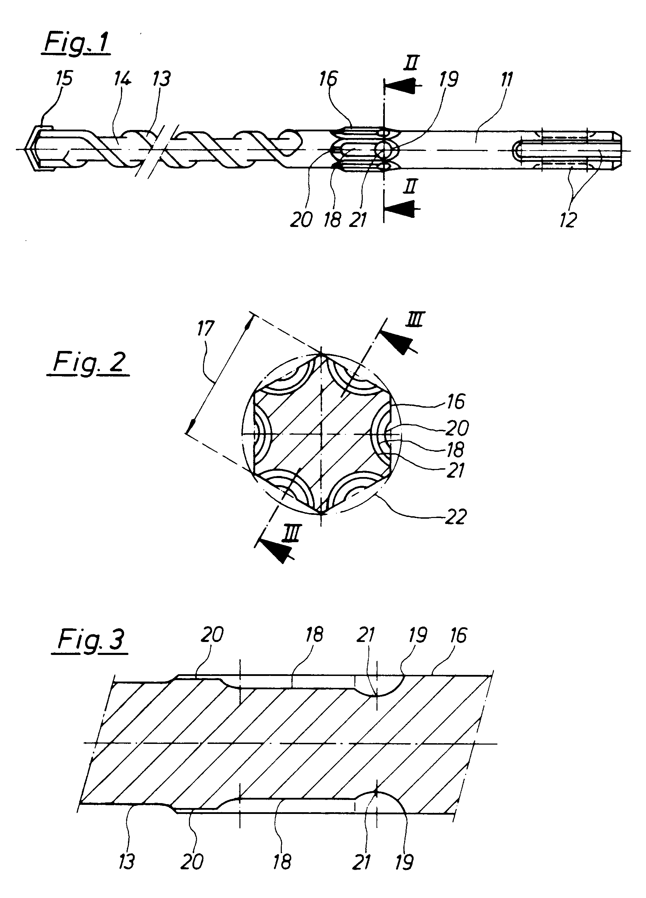

Der in Fig. 1 dargestellte Bohrer weist einen Einspannschaft 11 mit den Antriebsnuten 12 und einen Bohrerschaft 13 auf. Der Bohrerschaft 13 ist mit zwei Spanabführnuten 14 versehen und trägt an seinem vorderen Ende eine Schneidplatte 15. Zwischen Einspannschaft 11 und Bohrerschaft 13 befinden sich die Mitnahmeflächen 16, die wie aus Fig. 2 ersichtlich ist, als Sechskant mit der Schlüsselweite 17 konzentrisch zur Bohrerlängsachse angeordnet sind.

Die Mitnahmeflächen 16 sind mit Vertiefungen in Form von Längsrillen 18 versehen, deren Rillenwandungen im Querschnitt vorteilhaft kreisförmig gebogen sind, welche zur Übertragung der Axialkraft am maschinenseitigen Ende 19 geschlossen sind und am vorderen Ende über Einführnuten 20 mit dem Bohrerschaft 13 verbunden sind, wie aus Fig. 3 ersichtlich. Die Rillen 18 in den Mitnahmeflächen 16 weisen an der der Schneide 15 abgewandten Seite eine Vertiefung 21 auf um die axiale Beweglichkeit zu verringern (Fig. 3). Hilfsweise ist in Fig. 2 der kleinste Hüllkreis 22 der Mitnahmeflächen 16 angegeben, der größer als der Durchmesser der Schneidplatte 15 oder von dem Einspannschaft 11 ist.

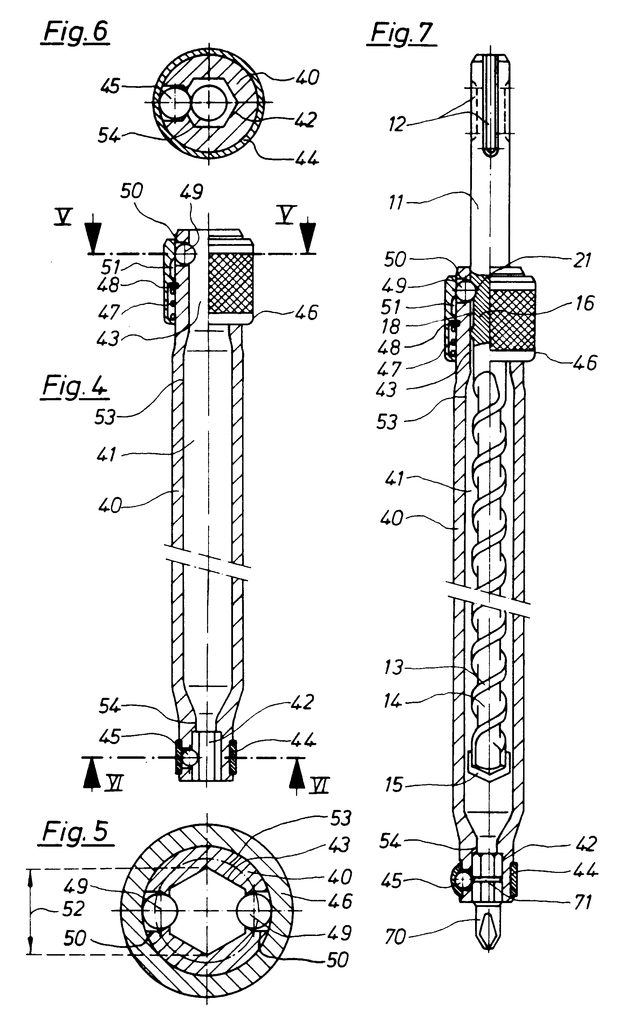

Der in Fig. 4 dargestellte Schraubbithalter weist einen Rohrkörper 40 mit einer Längsöffnung 41 sowie der in diesem Ausführungsbeispiel als Sechskant ausgebildeten vorderen Innenmitnahme 42 (Fig. 6) und hinteren Innenmitnahme 43 (Fig. 5) auf. In Fig. 5 ist die Querschnittsfläche 53 der Längsöffnung 41 ersichtlich, die größer ist als die Querschnittsfläche der hinteren inneren Mitnahme 43 und deren Durchmesser 53 größer ist als das Eckmaß 52 der Mitnahme 43. Beim Schraubbithalter in Fig. 4 drückt ein elastischer Ring 44 eine Kugel 45 in die vordere Innenmitnahme 42 und in die Verriegelungsnut 71 des Schraubbits 70 (Fig. 7). Fig. 6 zeigt, daß der Querschnitt 54 der Längsöffnung 41 im Bereich hinter der vorderen Mitnahme 42 kleiner ist als deren Querschnitt und dadurch eine axiale Begrenzung für den Schraubbit 70 bildet. Eine axial verschiebliche Verriegelungshülse 46 wird durch eine Zylinderfeder 47, welche sich an einem Sicherungsring 48 abstützt, in einer Endstellung gehalten. Hierbei werden die Verriegelungskugeln 49 durch einen Durchbruch 50 des Innensechskantes 43 der hinteren Mitnahme (Fig. 4) in die Längsrillen 18 der Mitnahmeflächen 16 des Bohrers gedrückt, so daß die beim Schrauben notwendige Anpreßkraft vom Einspannschaft 11 des Bohrers über die Vertiefung 21 der Längsrillen 18 auf die Verriegelungskugeln 49 des Schraubadapters in den Rohrkörper 40 auf das Schraubbit 70 übertragen wird (Fig. 7). Zum Entriegeln wird die Verriegelungshülse 46 gegen die Zylinderfeder 47 in Richtung Bohrmaschine verschoben. Die Verriegelungskugeln 49 können jetzt beim Abziehen des Schraubadapters vom Bohrer in die umlaufende Ringnut 51 (Fig. 4) ausweichen.

Aus Fig. 4 bis Fig. 7 sind die im Bereich der Mitnahmen 42 und 43 durch das Umformen reduzierten Außendurchmesser des Rohrkörpers 40 ersichtlich.

## Patentansprüche

1. Bohrer für Handbohrmaschinen, bestehend aus einem maschinenseitigen Einspannschaft (11), einem Bohrerschaft (13) mit mindestens einer Bohrkleinabführnut (14) und mindestens einer Schneide (15), vorzugsweise aus hartem Schneidstoff, sowie zwischen Einspannschaft (11) und Bohrerschaft (13) konzentrisch zur Bohrerlängsachse liegenden Mitnahmeflächen (16), deren kleinster, diese Mitnahmeflächen (16) umschreibender Hüllkreis (22) grösser ist als der kleinste, die Bohrerschneiden (15) umschreibende Hüllkreis und einen grösseren Durchmesser hat als ein kleinster, den maschinenseitigen Einspannschaft (11) umschreibender Hüllkreis, **dadurch gekennzeichnet**, dass die Schlüsselweite (17) der Mitnahmeflächen (16) gleich bis das 1,2-fache des Durchmessers des Einspannschaftes (11) ist und in dem vor dem Einspannschaft (11) liegenden Abschnitt Vertiefungen (18) spanlos eingeformt worden sind, wobei der hierbei verdrängte Werkstoff die Mitnahmeflächen (16) bildet.

2. Bohrer nach Anspruch 1, dadurch gekennzeichnet, dass die Zahl der Mitnahmeflächen (16) gerade ist.

3. Bohrer nach Anspruch 1 oder 2, dadurch gekennzeichnet, dass die Mitnahmeflächen (16) als Sechskant ausgebildet sind.

4. Bohrer nach einem der vorstehenden Ansprüche, dadurch gekennzeichnet, dass in mindestens einer der Mitnahmeflächen (16) Vertiefungen (18) angebracht sind.

5. Bohrer nach Anspruch 4, dadurch gekennzeichnet, dass die Vertiefungen sich als Rillen (18) in den Mitnahmeflächen (16) parallel zur Bohrerlängsachse erstrecken.

6. Bohrer nach Anspruch 5, dadurch gekennzeichnet, dass die Rillen 18 in den Mitnahmeflächen (16) an der der Schneide (15) abgewandten Seite eine Vertiefung (21) aufweisen.

7. Bohrer nach einem der vorstehenden Ansprüche, dadurch gekennzeichnet, dass bei einem Bohrer, dessen Einspannschaft (11) einen grösseren Durchmesser hat als der Bohrerschaft (13), die Rillen (18) in den Mitnahmeflächen (16) durch Einführnuten (20) mit dem Bohrerschaft (13) verbunden sind, wobei die Einführnuten (20) eine geringere Tiefe als die Rillen (18) haben.

8. Bohrer nach einem der vorstehenden Ansprüche, dadurch gekennzeichnet, dass eine Querschnittsfläche rechtwinklig zur Bohrerlängsachse und innerhalb der axialen Erstreckung der Mitnahmeflächen (16) in bezug auf die Querschnittsfläche des kreisrunden Einspannschaftes (11) geringfügig kleiner bis annähernd gleich gross ist.

9. Verfahren zum Herstellen von zwischen Einspannschaft (11) und Bohrerschaft (13) liegenden Mitnahmeflächen (16) eines Bohrers entsprechend einem der Ansprüche 1 bis 8, dadurch gekennzeichnet, dass in dem zylindrischen, vor dem Einspannschaft (11) gleichen Durchmessers liegenden Abschnitt Vertiefungen (18) spanlos eingeformt werden und der hierbei verdrängte Werkstoff die Mitnahmeflächen (16) bildet, wobei das Umformen durch mehrere radial auf den zylindrischen Teil einwirkende Umformwerkzeuge erfolgt.

10. Verfahren nach Anspruch 9, dadurch gekennzeichnet, dass die Zahl der Umformwerkzeug gleich der Zahl der Mitnahmeflächen (16) ist.

11. Rohrförmiger Schraubbithalter (40), der an seinem vorderen Ende eine innere Mitnahme (42) zur Aufnahme von Schraubbits (70) aufweist, an seinem hinteren Ende eine innere Mitnahme (43) zur Übertragung der Drehbewegung von einer Maschine oder einem Bohrer und dessen vordere wie hintere innere Mitnahmen (42, 43) durch eine Längsöffnung (41) miteinander verbunden sind, dadurch gekennzeichnet, dass der Durchmesser der Längsöffnung (41) gleich gross bzw. grösser ist als das Eckmass (52) der Querschnittsfläche der hinteren inneren Mitnahme (43).

12. Schraubbithalter nach Anspruch 11, dadurch gekennzeichnet, dass der Querschnitt (54) der Längsöffnung (41) im Bereich hinter der vorderen inneren Mitnahme (42) kleiner ist als der Querschnitt der vorderen inneren Mitnahme (42).

13. Schraubbithalter nach Anspruch 12, dadurch gekennzeichnet, dass in der Längsöffnung (41) hinter der vorderen inneren Mitnahme (42) ein Stabmagnet befestigt ist.

## Claims

1. Drills for hand-operated drilling machines, comprising a clamping shaft (11) near the machine, a drill shaft (13) with at least one groove for removal of borings (14) and at least one cutter (15), preferably of a hard cutting material, as well as a pickup surfaces (16), which are placed concentrically to the longitudinal axis of the drill between clamping shaft (11) and drill shaft (13), their smallest sleeve circle (22) which circumscribes these pickup surfaces (16) being larger than the smallest sleeve circle which circumscribes the drill cutters (15) and having a larger diameter than a smallest sleeve circle which circumscribes the clamping shaft (11) near the machine, **characterised in that** the key width (17) of the pickup surfaces (16) equals 1.2 times the diameter of the clamping shaft (11), and that recesses (18) are formed free of borings into the section in front of the clamping shaft (11) and that thereby displaced material forms the pickup surfaces (16).

2. Drill according to claim 1, **characterised in that** the number of pickup surfaces (16) is even.

3. Drill according to claim 1 or 2, **characterised in that** the pickup surfaces (16) are hexagonal.

4. Drill according to one of the above claims, **characterised in that** recesses (18) are formed in at least one of the pickup surfaces (16).

5. Drill according to claim 4, **characterised in that** the recesses extend in the form of grooves (18) in the pickup surfaces (16) parallel with the longitudinal axis of the drill.

6. Drill according to claim 5, **characterised in that** the grooves (18) in the pickup surfaces (16) have a deepening (21) at the side remote of the cutter (15).

7. Drill according to one of the above claims, **characterised in that** a drill with a clamping shaft (11) of larger diameter than the drill shaft (13) has the grooves (18) in the pickup surfaces (16) connected to the drill shaft (13) by means of introductory grooves (20) and that the depth of the introductory grooves (20) is less than that of the grooves (18).

8. Drill according to one of the above claims, **characterised in that** a cross-sectional surface is, rectangularly to the longitudinal axis of the drill and within the axial extent of the pickup surfaces (16), between slightly smaller and approximately of equal dimension relative to the cross-sectional surface of the circular clamping shaft (11).

9. Method for producing pickup surfaces (16) of a drill which are placed between clamping shaft (11) and drill shaft (13) according to claims 1 to 8, **characterised in that** grooves (18) are formed free of borings in the cylindrical section located in front of the clamping shaft (11) of same diameter, and that thereby displaced material forms the pickup surfaces (16), and that the reshaping is carried out by a plurality of reshaping tools which act radially on the cylindrical section.

10. Method according to claim 9, **characterised in that** the number of reshaping tools equals the number of pickup surfaces (16).

11. Tubular screwbit holder (40) having at its front end an inner pickup (42) for accommodation of screwbits (70), at its rear end an inner pickup (43) for transmitting the rotary movement of a machine or a drill, and the front and rear inner pickups (42, 43) are interconnected by means of a longitudinal opening (41), **characterised in that** the diameter of the longitudinal opening (41) is equal or larger than the corner measure (52) of the cross-sectional surface of the rear inner pickup (43).

12. Screwbit holder according to claim 11, **characterised in that** the cross-section (54) of the longitudinal opening (41) in the area behind the front inner pickup (42) is smaller than the cross-section of the front inner pickup (42).

13. Screwbit holder according to claim 1, **characterised in that** a bar magnet is fixed in the longitudinal opening (41) behind the front inner pickup (42).

## Revendications

1. Foret pour perceuses portatives, constitué d'une tige de serrage (11) côté perceuse, d'un corps de foret (13) avec au moins une rainure (14) d'évacuation des copeaux de forage et au moins un tranchant (15), de préférence en matériau de coupe dur, ainsi que de faces entraîneuses (16), disposées concentriquement à l'axe longitudinal du foret entre la tige de serrage (11) et le corps de foret (13), le cercle enveloppant minimal (22) circonscrit à ces faces entraîneuses (16) étant plus grand que le cercle enveloppant minimal circonscrit aux tranchants (15) du foret et possédant un diamètre plus grand que celui d'un cercle enveloppant minimal circonscrit à la tige de serrage (11) côté perceuse, **caractérisé** en ce que l'ouverture de clé (17) des faces entraîneuses (16) est égale à jusqu'à 1,2 fois le diamètre de la tige de serrage (11) et des renfoncements (18) sont formés sans enlèvement de matière dans la partie située avant la tige de serrage (11), le matériau ainsi refoulé formant les faces entraîneuses (16).

2. Foret selon la revendication 1, **caractérisé** en ce que le nombre de faces entraîneuses (16) est pair.

3. Foret selon la revendication 1 ou 2, **caractérisé** en ce que les faces entraîneuses (16) sont réalisées sous la forme d'un six pans.

4. Foret selon l'une quelconque des revendications précédentes, **caractérisé** en ce que des renfoncements (18) sont formés dans au moins une des faces entraîneuses (16).

5. Foret selon la revendication 4, **caractérisé** en ce que les renfoncements s'étendent dans les faces entraîneuses (16) sous la forme de gorges (18) parallèles à l'axe longitudinal du foret.

6. Foret selon la revendication 5, **caractérisé** en ce que les gorges (18) formées dans les faces entraîneuses (16) présentent un renfoncement (21) sur leur côté opposé au tranchant (15).

7. Foret selon l'une quelconque des revendications précédentes, **caractérisé** en ce que, pour un foret dont la tige de serrage (11) possède un diamètre plus grand que celui du corps de foret (13), les gorges (18) formées dans les faces entraîneuses (16) sont reliées au corps de foret (13) par des rainures d'introduction (20), les rainures d'introduction (20) possédant une profondeur inférieure à celle des gorges (18).

8. Foret selon l'une quelconque des revendications précédentes, **caractérisé** en ce qu'une aire de section s'étendant perpendiculairement à l'axe longitudinal du foret et à l'intérieur du développement axial des faces entraîneuses (16) est légèrement inférieure à approximativement égale à l'aire de section de la tige de serrage circulaire (11).

9. Procédé de réalisation de faces entraîneuses (16), situées entre la tige de serrage (11) et le corps de foret (13) d'un foret selon l'une quelconque des revendications 1 à 8, **caractérisé** en ce que des renfoncements (18) sont formés sans enlèvement de matière dans la partie cylindrique précédant la tige de serrage (11) de même diamètre et le matériau ainsi refoulé forme les faces entraîneuses (16), le formage s'effectuant au moyen de plusieurs outils de formage agissant radialement sur la partie cylindrique.

10. Procédé selon la revendication 9, **caractérisé** en ce que le nombre d'outils de formage est égal au nombre de faces entraîneuses (16).

11. Adaptateur tubulaire (40) porte-embout de vissage, présentant à son extrémité avant une partie entraîneuse intérieure (42) pour recevoir des embouts de vissage (70), à son extrémité arrière une partie entraîneuse intérieure (43) pour transmettre le mouvement de rotation d'une perceuse ou d'un foret, et dont les parties entraîneuses intérieures avant et arrière (42, 43) sont mutuellement reliées par une ouverture longitudinale (41), **caractérisé** en ce que le diamètre de l'ouverture longitudinale (41) est supérieur ou égal au surangle (52) de l'aire de section de la partie entraîneuse intérieure arrière (43).

12. Adaptateur porte-embout de vissage selon la revendication 11, **caractérisé** en ce que la section (54) de l'ouverture longitudinale (41) dans la région située après la partie entraîneuse intérieure avant (42), est inférieure à la section de la partie entraîneuse intérieure avant (42).

13. Adaptateur porte-embout de vissage selon la revendication 12, **caractérisé** en ce qu'un barreau aimanté est fixé dans l'ouverture longitudinale (41), dans la région située après la partie entraîneuse intérieure avant (42).
